# EUROPEAN PATENT SPECIFICATION

(11) **EP 2 303 939 B1**
(45) Date of publication and mention of the grant of the patent: **05.04.2017**
(21) Application number: 09798796.0
(22) Date of filing: 17.07.2009
(51) Int. Cl.: C08F 290/06, C08F 210/00, C08F 8/00, C08F 222/06, C08F 210/02, C08F 290/04, C10M 145/16, C10M 149/12, C08F 8/02, C08F 8/32, C08F 8/48, C10M 149/10

(54) **COPOLYMERS MADE WITH ALLYL-TERMINATED POLYOLEFINS AND UNSATURATED ACIDIC REAGENTS, DISPERSANTS USING SAME, AND METHODS OF MAKING SAME**
COPOLYMERE AUS ALLYLTERMINIERTEN POLYOLEFINEN UND UNGESÄTTIGTEN SAUREN REAGENZIEN, DISPERSIONSMITTEL DAMIT UND HERSTELLUNGSVERFAHREN DAFÜR
COPOLYMÈRES RÉALISÉS AVEC DES POLYOLÉFINES À TERMINAISON ALLYLE ET DES RÉACTIFS ACIDES INSATURÉS, DES DISPERSANTS UTILISANT CEUX-CI, ET DES PROCÉDÉS DE FABRICATION DE CEUX-CI

(30) Priority: 18.07.2008 US 176292
(43) Date of publication of application: 06.04.2011
(73) Proprietor: Chevron Oronite Company LLC, San Ramon, CA 94583 (US)
(72) Inventor: HARRISON, James, J., Novato, CA 94945 (US); STOKES, Casey, D., Novato, CA 94945 (US)
(74) Representative: Nash, David Allan
(86) International application number: PCT/US2009/050965
(87) International publication number: WO 2010/009379

(56) References cited:
- EP-A2- 1 156 088
- WO-A1-03/051932
- US-A1- 2003 094 223
- US-A1- 2006 041 081
- US-A1- 2007 155 910
- WALCH, E. ET AL.: 'Telechelic polyisobutylene with unsaturated end groups and with anhydride end groups' POLYMER vol. 35, April 1994, pages 1774 - 1778, XP024121954
- ROTH, MICHAEL ET AL.: 'A Novel Method for the Determination of Propagation Rate Constants: Carbocationic Oligomerization of Isobutylene' MACROMOLECULES vol. 29, 09 September 1996, pages 6104 - 6109, XP008138870
- SIMISON, KELBY L. ET AL.: 'End-Quenching of Quasiliving Carbocationic Isobutylene Polymerization with Hindered Bases: Quantitative Formation of exo- Olefin-Terminated Polyisobutylene' MACROMOLECULES vol. 39, April 2006, pages 2481 - 2487, XP002490679

## Description

### FIELD

The disclosed subject matter relates to copolymers made using polyolefins and unsaturated acidic reagents, dispersants using same, and methods of making same.

### BACKGROUND

Copolymers of polyolefins and unsaturated acidic reagents, and dispersants made from same, are useful components in lubricants, fuels, and other applications. For example, polyisobutylene (PIB) succinic anhydride (SA) copolymers, commonly referred to as "polyPIBSA," are conventionally made by reacting PIB with maleic anhydride and a free radical initiator. Optionally, the polyPIBSA is then reacted with a polyamine to form polysuccinimides, or otherwise derivitized, for use in different compositions. For examples of methods of making polyPIBSA and uses of same, see, *e.g.,* U.S. Patent Nos. 5,112,507, 5,175,225, 5,616,668, 6,451,920, and 6,906,011.

However, polyPIBSA made using conventional methods does not necessarily have appropriate properties to be useful in a variety of climates. For example, conventional polyPIBSA, and/or dispersants made from same, may have a Cold Cranking Simulator (CCS) viscosity and/or kinematic viscosity (kv) that is too high at relatively low temperatures (*e.g.,* below 0°C) to enable the use of that polyPIBSA in lubricants intended for harsh winter climates.

Thus, there is a need for copolymers such as polyPIBSA, and dispersants made from same, having appropriate properties for use in compositions in a variety of climates, *e.g.,* at temperatures below 0°C.

In addition, polyPIBSA made using conventional methods normally has a low degree of oligomerization and a low molecular weight. An example of this is disclosed in U.S. Patent No. 5,112,507, columns 8 and 9. We have found that carrying out a conventional copolymerization reaction at lower temperature results in an increase in the degree of oligomerization and the molecular weight. However, when one carries out a conventional copolymerization at lower temperature, the degree of oligomerization is increased but at the same time the percent actives decreases. Since high molecular weight dispersants are generally useful in preventing viscosity increase due to soot, and in controlling sludge and varnish, it is desirable to find a way to increase the degree of oligomerization of polyPIBSA and polysuccinimides made from polyPIBSA while still maintaining high percent actives.

### SUMMARY

The present invention is defined in and by the appended claims.

Provided herein are copolymers made by copolymerizing an allyl-terminated polyolefin with an unsaturated acidic reagent, dispersants made using such copolymers, and methods of making same.

Under one aspect, a copolymer of an unsaturated acidic reactant and a high molecular weight polyolefin, wherein the polyolefin includes an allyl-terminated polymeric product, wherein the high molecular weight polyolefin has a number average molecular weight between about 500 and about 10,000, is provided.

In some embodiments, the allyl-terminated polymeric product is prepared by:
(a) ionizing a polyolefin to form a carbocation terminated polyolefin;
(b) reacting the carbocation terminated polyolefin from step (a) with an allylsilane compound in the presence of a Lewis acid, and
(c) terminating step (b) to form the allyl-terminated polymeric product.

Under another aspect, a copolymer of an unsaturated acidic reactant and a high molecular weight polyolefin, wherein the polyolefin includes an allyl-terminated quasi-living polymeric product, is provided.

In some embodiments, the allyl-terminated quasi-living polymeric product is prepared by (a) forming a quasi-living tert-halide terminated polyolefin under suitable quasi-living conditions in the presence of a Lewis acid, and (b) reacting the quasi- living tert-halide terminated polyolefin with an allylsilane compound, and (c) terminating the reaction of step (b) to form the allyl terminated quasi-living polymeric product.. The copolymer can be formed by contacting the polyolefin with the unsaturated acidic reactant in the presence of a free radical initiator, such as a peroxide.

In some embodiments, the high molecular weight polyolefin has a number average molecular weight between about 500 and about 10,000, *e.g.,* between about 900 and about 5,000, *e.g.,* between about 900 and about 2,500, or, *e.g.,* between about 2,000 and about 4,000. In some embodiments, the copolymer has a succinic ratio of between about 1 and about 2, or between about 1.0 and about 1.5. In some embodiments, the polyolefin has an allylic end-group content of at least about 75%, or at least about 90%, or at least about 91%, or at least about 92%, or at least about 93%, or at least about 94%, or at least about 95%, or at least about 96%, or at least about 97%, or at least about 98%, or at least about 99%, or about 100%. In some embodiments, the polyolefin has a dispersion index of less than about 2.0, or less than about 1.4, or less than about 1.3, or less than about 1.2, or less than about 1.1, or about 1.0.

In some embodiments, the high molecular weight polyolefin is polyisobutylene. In some embodiments, the high molecular weight polyolefin has sufficient molecular weight and chain length to lend solubility in lubricating oil to its reaction products. In some embodiments, the reaction products can dissolve in aliphatic and/or aromatic hydrocarbons such as lubricating oils and fuels in substantially all proportions.

The unsaturated acidic reactant can be of the formula: 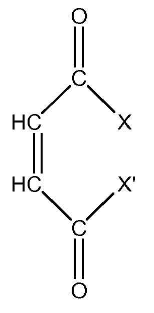 wherein X and X' are each independently selected from the group consisting of -OH, -Cl, - O-lower alkyl, and when taken together, X and X' are -O-. For example, the acidic reactant can include maleic anhydride.

In some embodiments, the copolymer has the formula: 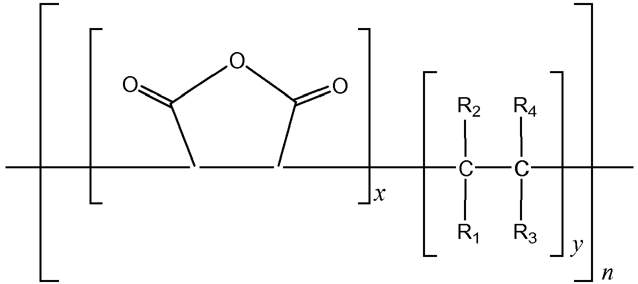 wherein three of R₁, R₂, R₃, and R₄ are hydrogen and the other is high molecular weight polyalkyl; wherein each of *x, y,* and *n* is, independently, 1 or greater, wherein the ratio of *x*:*y* is about 2:1 to about 1:1, or about 1.5:1 to about 1:1. In some embodiments, *n* is between 1 and 40, or between 1 and 20, or between 1 and 10, or 2 or greater. The high molecular weight polyalkyl can include a polyisobutyl group having at least 30 carbon atoms, or at least 50 carbon atoms.

Under one aspect of this invention, the copolymer of this invention has a degree of oligomerization of between 1 and 40, or between 1 and 20, or between 1 and 10, or 2 or greater, and the % actives is greater than about 60%, or greater than about 70%, or greater than about 75%, or greater than about 80%, or greater than about 85%, or greater than about 90%, or greater than about 95%. The term "% actives" refers to the amount of copolymer in the product of the reaction of the unsaturated acidic reactant and high molecular weight polyolefin.

Under another aspect of the present invention, a polysuccinimide prepared by reacting: a) a copolymer of an unsaturated acidic reactant and a high molecular weight polyolefin, wherein the polyolefin includes an allyl-terminated polymeric product, with b) an amine, a polyamine having at least two basic nitrogen atoms, or mixtures thereof, is provided.

Under another aspect, a lubricating oil composition including a major amount of an oil of lubricating viscosity and a minor amount of the above-mentioned polysuccinimide is provided.

Under another aspect, a method of making a copolymer includes (a) forming a high molecular weight, allyl-terminated polyolefin; and (b) contacting the polyolefin with an unsaturated acidic reactant in the presence of a free radical initiator (such as a peroxide) to form a copolymer.

In some embodiments, forming the polyolefin includes forming a tert-halide terminated polyolefin, and contacting the tert-halide terminated polyolefin with an allylsilane compound and a Lewis acid.

### DETAILED DESCRIPTION

Unless defined otherwise, all technical and scientific terms used herein have the same meaning as is commonly understood by one of ordinary skill in the art. In the event that there are a plurality of definitions for a term used herein, the definitions provided in this section prevail unless stated otherwise.

As used herein, "allyl" refers to the following structure:

-CH₂-CH=CH₂

As used herein, "alkyl" refers to a carbon chain or group containing from 1 to 20 carbons, or 1 to 16 carbons. Such chains or groups may be straight or branched. Exemplary alkyl groups herein include, but are not limited to, methyl, ethyl, propyl, isopropyl, isobutyl, n-butyl, sec-butyl, tert-butyl, iospentyl, neopentyl, tert-pentyl, or isohexyl. As used herein, "lower alkyl" refers to carbon chains or groups having from 1 carbon atom to about 6 carbon atoms.

As used herein, "alkenyl" refers to a carbon chain or group containing from 2 to 20 carbons, or 2 to 16 carbons, wherein the chain contains one or more double bonds. An example includes, but is not limited to, an allyl group. The double bond of an alkenyl carbon chain or group may be conjugated to another unsaturated group. An alkenyl carbon chain or group may be substituted with one or more heteroatoms. An alkenyl carbon chain or group may contain one or more triple bonds.

As used herein, "alkynyl" refers to a carbon chain or group containing from 2 to 20 carbons, or 2 to 16 carbons, wherein the chain contains one or more triple bonds. An example includes, but is not limited to, a propargyl group. The triple bond of an alkynyl carbon chain or group may be conjugated to another unsaturated group. An alkynyl carbon chain or group may be substituted with one or more heteroatoms. An alkynyl carbon chain or group may contain one or more double bonds.

As used herein, "aryl" refers to a monocyclic or multicyclic aromatic group containing from about 6 to about 30 carbon atoms. Aryl groups include, but are not limited to, fluorenyl, phenyl, or naphthyl.

As used herein, "alkaryl" refers to an aryl group substituted with at least one alkyl, alkenyl, or alkynyl group.

As used herein, "aralkyl" refers to an akyl, alkenyl, or alkynyl group substituted with at least one aryl group.

As used herein, "amide" refers to a compound of formula: 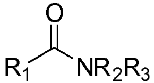 wherein R₁-R₃ are each, independently, hydrogen or hydrocarbyl.

As used herein, "amine" refers to a compound of formula:

R₃-NR₁R₂

wherein R₁-R₃ are each, independently, hydrogen or hydrocarbyl.

As used herein, "carbocation" and "carbenium ion" refer to a positively charged carbon atom.

As used herein, "carbocation terminated polyolefin" refers to a polyolefin containing at least one carbocation end group. Examples include, but are not limited to, compounds of the formula:

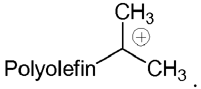

As used herein, "chain end concentration" refers to the sum of the concentrations of olefin end groups, tert-halide end groups, and carbenium ions. When a mono-functional initiator is used, the chain end concentration is approximately equal to the initiator concentration. For a multi-functional initiator, when the functionality of the initiator equals x, then the chain end concentration is approximately equal to x times the initiator concentration.

As used herein, "chain transfer agent" refers to a compound which interchanges its halide ion with a carbenium ion to form a new carbenium ion.

As used herein, "common ion salt" refers to an ionic salt that is optionally added to a reaction performed under quasiliving carbocationic polymerization conditions to prevent dissociation of the propagating carbenium ion and counter-ion pairs.

As used herein, "common ion salt precursor" refers to an ionic salt that is optionally added to a reaction performed under quasiliving carbocationic polymerization conditions, which generates counter-anions that are identical to those of the propagating chain ends, via in situ reaction with a Lewis acid.

As used herein, "diluent" refers to a liquid diluting agent or compound. Diluents may be a single or a mixture of two or more compounds. Diluents may completely dissolve or partially dissolve the reaction components. Examples include, but are not limited to, hexane or methyl chloride, or mixtures thereof.

As used herein, "dispersion index" or DI refers to the ratio of the weight average molecular weight of a polymer to the number average molecular weight of the polymer, and is reflective of the distribution of molecular masses in a polymer. A dispersion index of 1 indicates that the polymer is monodisperse. A dispersion index of greater than 1 indicates that there is a distribution of molecular masses of polymer chains in the polymer.

As used herein, "electron donor" refers to a molecule that is capable of donating a pair of electrons to another molecule. Examples include, but are not limited to, molecules capable of complexing with Lewis acids. Further examples include, but are not limited to, bases and/or nucleophiles. Further examples include, but are not limited to, molecules capable of abstracting or removing a proton.

As used herein, "free radical initiator" refers to a material that decomposes at elevated temperatures to form free radicals which react with an unsaturated acidic reagent and a polyolefin to form a copolymer.

As used herein, "halide,"halo," or "halogen" refer to F, Cl, Br, or I.

As used herein "hydrocarbyl" refers to a monovalent linear, branched or cyclic group which contains only carbon and hydrogen atoms.

As used herein, "inifer" refers to a compound that acts as both an initiator and a chain transfer agent.

As used herein, "initiator" refers to a compound that provides a carbocation for a quasi living or inifer polymerization. Examples include, but are not limited to, compounds or polyolefins with one or more tertiary end groups. An initiator may be mono-functional or multi-functional. As used herein, "mono-functional initiator" refers to an initiator that provides approximately one stoichiometric equivalent of carbocation relative to initiator. As used herein, "multi-functional initiator" refers to an initiator that provides approximately x stoichiometric equivalents of carbocation relative to initiator, wherein x represents the functionality of the initiator. When a mono-functional initiator is used, the chain end concentration is approximately equal to the initiator concentration. For a multi-functional initiator, when the functionality of the initiator equals x, then the chain end concentration equals x times the initiator concentration.

As used herein, "ionized polyolefin" refers to a polyolefin containing at least one carbenium ion. An example includes, but is not limited to, a tert-halide terminated polyolefin that has been ionized into a carbocation terminated polyolefin. A further example includes, but is not limited to, a quasiliving carbocation terminated polyolefin. A further example includes, but is not limited to, a vinylidene terminated polyolefin that has been ionized into an ionized polyolefin or quasiliving carbocation terminated polyolefin. A further example includes, but is not limited to, a polyolefin containing an olefin that has been ionized into a quasi-living carbocation terminated polyolefin or an ionized polyolefin. A further example includes, but is not limited to, an ionized polyolefin derived from an inifer.

As used herein, "Lewis acid" refers to a chemical entity that is capable of accepting a pair of electrons.

As used herein, "monomer" refers to an olefin that is capable of combining with a carbocation to form another carbocation.

As used herein, "pyridine derivative" refers to a compound of the formula: 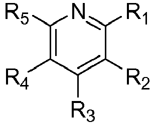 wherein R₁, R₂, R₃, R₄, and R₅ are each, independently, hydrogen or hydrocarbyl; or R₁ and R₂, or R₂ and R₃, or R₃ and R₄, or R₄ and R₅ independently form a fused aliphatic ring of about 4 to about 7 carbon atoms or a fused aromatic ring of about 5 to about 7 carbon atoms.

As used herein, "quasiliving carbocationic polymerization conditions" refers to quasiliving polymerization conditions that allow for the formation of quasiliving carbocationic polyolefins.

As used herein, "quasiliving carbocationic polyolefin" refers to a carbocationic polyolefin that has been formed under quasiliving polymerization conditions.

As used herein, "quasiliving polymerization" refers to polymerizations that proceed in the absence of irreversible chain-breaking events. Quasiliving polymerizations proceed by initiation and is followed by propagation, wherein propagating (living) species are in equilibrium with non-propagating (non-living) polymer chains.

As used herein, "quasiliving polymerization conditions" refers to reaction conditions that allow quasiliving polymerization to occur.

As used herein, "termination" or "terminating" refers to the chemical reaction that terminates a polymerization process by destruction of a Lewis acid.

As used herein, "tert-halide terminated polyolefin" refers to a polyolefin that contains at least one tertiary halide end group. An example includes, but is not limited to, a compound of formula: 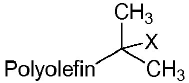 wherein X is a halogen.

As used herein, "vinylidene" refers to a compound of the formula: 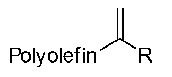 wherein R is hydrocarbyl, *e.g.,* methyl or ethyl. When R is methyl, the vinylidene is methylvinylidene.

Unless otherwise specified, all percentages are in weight percent.

This application is related to the following applications:
U.S. Patent Application No. 12/102,827, filed April 14, 2008 and entitled "Copolymers Made with Quasi-Living Polyolefins and Unsaturated Acidic Reactants, Dispersants Using Same, and Methods of Making Same;" and
U.S. Patent Application No. 12/055,281, filed March 25, 2008 and entitled "Production of Vinylidene-Terminated Polyolefins Via Quenching with Monosulfides."

### METHODS

In some embodiments, methods of forming copolymers such as those described herein include the steps of (1) providing a high molecular weight polyolefin, which is an allyl-terminated polymeric product, and (2) reacting the polyolefin with an unsaturated acidic reagent in the presence of a free radical initiator, to form the copolymer.

In some embodiments, the polyolefin is a polyolefin having an allyl-terminated chain end, the free radical initiator is a peroxide, and the unsaturated acidic reagent is maleic anhydride. In such embodiments, the resulting copolymer is of the formula: 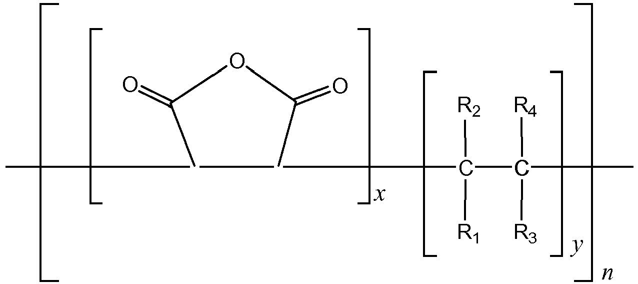 wherein three of R₁, R₂, R₃, and R₄ are hydrogen and the other is high molecular weight polyalkyl; wherein each of *x, y,* and *n* is, independently, 1 or greater. In some embodiments, the ratio of *x*:*y* is from about 2:1 to about 1:1, or about 1.5:1 to about 1:1, and *n* is between 1 and 40, or between 1 and 20, or between 1 and 10, or 2 or greater.

In some embodiments, R₁, R₂, and R₃ are hydrogen, and R₄ is a high molecular weight polyisobutylene chain. Such a copolymer is referred to as polyallyl polyisobutylene succinic anhydride, or polyallyl PIBSA.

For example, in some embodiments of methods forming polyallylPIBSA, the polyolefin is allyl-terminated PIB of the formula: 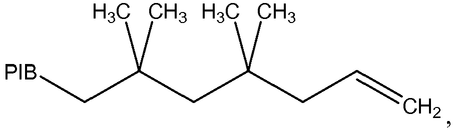 and has a relatively high percent of allylic end groups, *e.g.,* at least about 75%, or at least about 90%, or at least about 91%, or at least about 92%, or at least about 93%, or at least about 94%, or at least about 95%, or at least about 96%, or at least about 97%, or at least about 98%, or at least about 99%, or about 100%. allylic end groups. The allyl-terminated PIB also has a DI of less than about 2.0, or less than about 1.4, or less than about 1.3, or less than about 1.2, or less than about 1.1, or about 1.0.

The allyl-terminated PIB is contacted with the free radical initiator, *e.g.,* a peroxide such as di-tert-amyl peroxide, and with the unsaturated acidic reactant maleic anhydride, to form polyallyl PIBSA.

Whereas conventional methods of making polyPIBSA typically involve reacting commercially purchased or otherwise conventional PIB with maleic anhydride and a free radical initiator, the use of allyl-terminated PIB provides multiple benefits, relative to that possible using conventional PIB. By "conventional PIB" it is meant PIB that has a relatively low percent of methylvinylidene end groups, *e.g.,* less than about 80%, and has a high dispersion index (DI), *e.g.,* greater than 1.4. Such conventional PIB is sometimes referred to as "high methylvinylidene PIB," or "highly reactive PIB."

Among other things, the use of allyl-terminated PIB in the formation of polyallyl PIBSA provides a polymeric product having a degree of oligomerization of between 1 and 40, or between 1 and 20, or between 1 and 10, or 2 or greater; and the % actives is greater than about 60%, or greater than about 70%, or greater than about 75%, or greater than about 80%, or greater than about 85%, or greater than about 90%, or greater than about 95%. In some embodiments, the copolymer has a succinic ratio of between about 1 and about 2, or between about 1.0 and about 1.5. In some embodiments, the polyolefin has an allylic end-group content of at least about 75%, or at least about 90%, or at least about 91%, or at least about 92%, or at least about 93%, or at least about 94%, or at least about 95%, or at least about 96%, or at least about 97%, or at least about 98%, or at least about 99%, or about 100%. In some embodiments, the polyolefin has a dispersion index of less than about 2.0, or less than about 1.4, or less than about 1.3, or less than about 1.2, or less than about 1.1, or about 1.0.

While not being bound by any particular theory, the relatively high degree of oligomerization of polyallylPIBSA is believed to be due to the fact that allyl terminated PIB has fewer allylic protons compared to conventional PIB resulting in less efficient chain transfer and a higher degree of oligomerization (higher molecular weight).

Various embodiments of different reactants and diluents that can be used to form copolymers made with allyl-terminated olefins and unsaturated acidic reactants, and useful ranges of reaction conditions for the formation of such copolymers, will now be described in greater detail. Then, some exemplary methods of preparing dispersants using such copolymers will be described, and several illustrative examples provided.

### (I) ALLYL- TERMINATED POLYOLEFINS

As noted above, in some embodiments, allyl terminated polyolefins are prepared by first ionizing a polyolefin to form a carbocation terminated polyolefin, followed by reaction of the carbocation terminated polyolefin with an allyl silane compound to form the allyl terminated polyolefin.

### A. CARBOCATION TERMINATED POLYOLEFINS

Carbocation terminated polyolefins may be made by any suitable method known to those of skill in the art. Examples include, but are not limited to, ionizing a tert-halide with a Lewis acid; ionizing a preformed polyolefin with a proton source; polymerizing an olefin monomer under quasiliving carbocationic polymerization conditions; or performing the "inifer" method.

In some embodiments, the carbocation terminated polyolefin contains one or more carbocation end groups. In some embodiments, the carbocation terminated polyolefin contains one carbocation end group. In some embodiments, the carbocation terminated polyolefin contains two carbocation end groups. In some embodiments, the carbocation terminated polyolefin contains three carbocation end groups. In some embodiments, the carbocation terminated polyolefin is a polyisobutylene with a cationic end group. In some embodiments, the carbocation terminated polyolefin is a compound of the following formula:

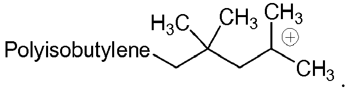

### (a) Carbocation terminated polyolefins from tert-halides

In some embodiments, the carbocation terminated polyolefin is derived from a tert-halide terminated polyolefin. In some embodiments, the carbocation terminated polyolefin is derived form a tert-chloride terminated polyolefin, tert-bromide terminated polyolefin, or tert-iodide terminated polyolefin. In some embodiments, the carbocation terminated polyolefin is derived from a tert-chloride terminated polyolefin or tert-bromide terminated polyolefin. In some embodiments, the carbocation terminated polyolefin is derived from tert-chloride terminated polyisobutylene of the following formula:

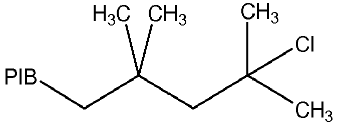

Tert-halide terminated polyolefins may be made by any method known to those of skill in the art.

In some embodiments, the carbocation terminated polyolefin is generated by contacting a tert-halide terminated polyolefin with a Lewis acid. In some embodiments, the carbocation terminated polyolefin is generated by contacting a tert-chloride terminated polyolefin, tert-bromide terminated polyolefin, or tert-iodide terminated polyolefin with a Lewis acid. In some embodiments, the carbocation terminated polyolefin is generated by contacting a tert-chloride terminated polyolefin with a Lewis acid.

In some embodiments, the tert-halide is derived from an inifer.

### (b) Carbocation terminated polyolefins from preformed polyolefins

In some embodiments, the carbocation terminated polyolefin is derived from a preformed polyolefin. In some embodiments, such preformed polyolefin contains one or more double bonds. In some embodiments, such preformed polyolefin contains one double bond. In some embodiments, such preformed polyolefin is a polyisobutylene derivative. In some embodiments, such preformed polyolefin contains one or more endo olefins.

In some embodiments, the carbocation terminated polyolefin is generated by contacting a proton source with a preformed polyolefin in the presence of a Lewis acid. In some embodiments, the carbocation terminated polyolefin is generated by contacting a preformed polyolefin containing one or more double bonds with a proton source in the presence of a Lewis acid. In some embodiments, the carbocation terminated polyolefin is generated by contacting a preformed polyolefin containing one double bond with a proton source in the presence of a Lewis acid. In some embodiments, the carbocation terminated polyolefin is generated by contacting a polyisobutylene derivative with a proton source in the presence of a Lewis acid. In some embodiments, the carbocation terminated polyolefin is generated by contacting a preformed polyolefin containing one or more endo olefins with a proton source in the presence of a Lewis acid.

### (c) Carbocation terminated polyolefins from the inifer method

In some embodiments, the carbocation terminated polyolefin is derived from an inifer using methods known to those of skill in the art. Non-limiting examples of such methods are described in U.S. Pat Nos. 4,276,394 and 4,568,732. In some embodiments, a monomer is reacted with an inifer carrying at least two tertiary halogens under cationic polymerization conditions. In some embodiments, the inifer is a binifer or a trinifer. In some embodiments, the inifer is tricumyl chloride, paradicumyl chloride, or tricumyl bromide.

### (d) Carbocation terminated polyolefins from olefinic monomers under quasi-living carbocationic polymerization conditions

In some embodiments, the carbocation terminated polyolefin is derived from olefinic monomers under quasi-living carbocationic conditions. Under such conditions, a quasi-living carbocationic polyolefin is generated. Such conditions may be achieved by any quasiliving method known to those of skill in the art. In some embodiments, a monomer, an initiator, and a Lewis acid are used. Non-limiting examples of such methods are described in EP 206756 B1 and WO 2006/110647 A1.

In some embodiments, the carbocation terminated polyolefin is a quasi-living carbocationic polyisobutylene of the following formula:

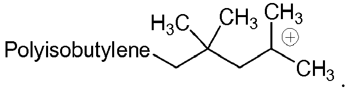

Some non-limiting examples of reagents and conditions suitable for polymerizations producing quasi-living polyolefins will be described below.

### (i) Initiators for quasi-living carbocationic polymerizations

In some embodiments, the initiator is a compound or polyolefin with one, or more than one, end group capable of initiating a cationic olefin polymerization. For example, the initiator can be a compound of formula (X'-CRₐR_{b})ₙR_{c} wherein Rₐ and R_{b} are, independently, hydrogen, alkyl, aryl, alkaryl, or aralkyl, provided that at least one of Rₐ or R_{b} is not hydrogen; and R_{c} has a valence of n, and n is an integer of one to 4. X' is an acetate, etherate, hydroxyl group, or a halogen. In some embodiments, Rₐ, R_{b} and R_{c} are hydrocarbon groups containing one carbon atom to about 20 carbon atoms. In a preferred embodiment, Rₐ, R_{b} and R_{c} are hydrocarbon groups containing one carbon atom to about 8 carbon atoms. In some embodiments, X' is a halogen. In a preferred embodiment, X' is chloride. In some embodiments, the structure of Rₐ, R_{b} and R_{c} mimics the growing species or monomer. In some embodiments, such structure is a 1-halo,1-phenylethane initiator for polystyrene or a 2,4,4-trimethyl pentyl halide initiator for polyisobutylene. In a preferred embodiment, Rₐ, R_{b} and R_{c} are each hydrocarbon groups containing one carbon atom to about 8 carbon atoms for the initiation of an isobutylene polymerization. In some embodiments, the initiator is a cumyl, dicumyl or tricumyl halide.

Some exemplary initiators include 2-chloro-2-phenylpropane, *i.e.,* cumyl chloride; 1,4-di(2-chloro-2-propyl)benzene, *i.e.,* di(cumylchloride); 1,3,5-tri(2-chloro-2-propyl)benzene, *i.e.,* tri(cumylchloride); 2,4,4-trimethyl-2-chloropentane; 2-acetyl-2-phenylpropane, *i.e.,* cumyl acetate; 2-propionyl-2-phenyl propane, *i.e.,* cumyl propionate; 2-methoxy-2-phenylpropane, *i.e.,* cumylmethyl ether; 1,4-di(2-methoxy-2-propyl)benzene, *i.e.,* di(cumylmethyl ether); 1,3,5-tri(2-methoxy-2-propyl)benzene, *i.e.,* tri(cumylmethyl ether); 2-chloro-2,4,4-trimethyl pentane (TMPC1); 1,3-di(2-chloro-2-propyl)benzene; and 1,3-di(2-chloro-2-propyl)-5-tert- butylbenzene (bDCC).

In some embodiments, the initiator can be mono-functional, bi-functional, or multi-functional. Some examples of mono-functional initators include 2-chloro-2-phenylpropane, 2-acetyl-2-phenylpropane, 2-propionyl-2-phenylpropane, 2-methoxy-2-phenylpropane, 2-ethoxy-2-phenylpropane, 2-chloro-2,4,4-trimethylpentane, 2-acetyl-2,4,4,-trimethylpentane, 2-propionyl-2,4,4-trimethylpentane, 2-methoxy-2,4,4-trimethylpentane, 2-ethoxy-2,4,4-trimethylpentane, and 2-chloro-2,4,4-trimethylpentane. Some examples of bi-functional initiators include 1,3-di(2-chloro-2-propyl)benzene, 1,3-di(2-methoxy-2-propyl)benzene, 1,4-di(2-chloro-2-propyl)benzene, 1,4-di(2-methoxy-2-propyl)benzene, and 5-*tert*-butyl-1,3,-di(2-chloro-2-propyl) benzene. Some examples of multi-functional initiators include 1,3,5-tri(2-chloro-2-propyl)benzene and 1,3,5-tri(2-methoxy-2-propyl)benzene.

### (ii) Monomers for quasi-living carbocationic polymerization redactions

In some embodiments, the monomer is a hydrocarbon monomer, *i.e.,* a compound containing only hydrogen and carbon atoms, including but not limited to, olefins and diolefins, and those having from about 2 to about 20 carbon atoms, *e.g.,* from about 4 to about 8 carbon atoms. Some exemplary monomers include isobutylene, styrene, beta pinene, isoprene, butadiene, 2-methyl-1-butene, 3-methyl-1-butene, and 4-methyl-1-pentene. Mixtures of monomers can also be used.

In some embodiments, the monomers are polymerized to produce polymers of different, but substantially uniform molecular weights. In some embodiments, the molecular weight of the polymer is from about 300 to in excess of a million g/mol. In some embodiments, such polymers are low molecular weight liquid or viscous polymers having a molecular weight of from about 200 to 10,000 g/mol, or solid waxy to plastic, or elastomeric materials having molecular weights of from about 100,000 to 1,000,000 g/mol, or more.

### (iii) Lewis acids for quasi-living carbocationic polymerization redactions

In the methods provided herein, in some embodiments, the Lewis acid is a non-protic acid, *e.g.,* a metal halide or non-metal halide.

Some examples of metal halide Lewis acids include a titanium (IV) halide, a zinc (II) halide, a tin (IV) halide, and an aluminum (III) halide, *e.g.,* titanium tetrabromide, titanium tetrachloride, zinc chloride, AlBr₃, and alkyl aluminum halides such as ethyl aluminum dichloride and methyl aluminum bromide. Some examples of non-metal halide Lewis Acids include an antimony (VI) halide, a gallium (III) halide, or a boron (III) halide, *e.g.,* boron trichloride, or a trialkyl aluminum compound such as trimethyl aluminum.

Mixtures of two, or more than two, Lewis acids can also used. In one example, a mixture of an aluminum (III) halide and a trialkyl aluminum compound is used. In some embodiments, the stoichiometric ratio of aluminum (III) halide to trialkyl aluminum is greater than 1, while in other embodiments, the stoichiometric ratio of aluminum (III) halide to trialkyl aluminum is less than 1. For example, a stoichiometric ratio of about 1:1 aluminum (III) halide to trialkyl aluminum compound; a stoichiometric ratio of 2:1 aluminum (III) halide to trialkyl aluminum compound; or a stoichiometric ratio of 1:2 aluminum (III) halide to trialkyl aluminum can be used. In another example, a mixture of aluminum tribromide and trimethyl aluminum is used.

In some embodiments, the Lewis acid can be added in a suitable number of aliquots, *e.g.,* in one aliquot or more than one aliquot, *e.g.,* two aliquots.

### (iv) Electron Donors for quasi-living carbocationic polymerization redactions

As is understood to one of ordinary skill in the art, some electron donors are capable of converting traditional polymerization systems into quasiliving polymerization systems. In some embodiments, the methods described herein are performed in the presence of an electron donor.

In some embodiments, the electron donor is capable of complexing with Lewis acids. In some embodiments, the electron donor is a base and/or nucleophile. In some embodiments, the electron donor is capable of abstracting or removing a proton. In some embodiments, the electron donor is an organic base. In some embodiments, the electron donor is an amide. In some embodiments, the electron donor is N,N-dimethylformamide, N,N-dimethylacetamide, or N,N-diethylacetamide. In some embodiments, the electron donor is a sulfoxide. In some embodiments, the electron donor is dimethyl sulfoxide. In some embodiments, the electron donor is an ester. In some embodiments, the electron donor is methyl acetate or ethyl acetate. In some embodiments, the electron donor is a phosphate compound. In some embodiments, the electron donor is trimethyl phosphate, tributyl phosphate, or triamide hexamethylphosphate. In some embodiments, the electron donor is an oxygen-containing metal compound. In some embodiments, the electron donor is tetraisopropyl titanate.

In some embodiments, the electron donor is pyridine or a pyridine derivative. In some embodiments, the electron donor is a compound of formula: 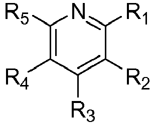 wherein R₁, R₂, R₃, R₄, and R₅ are each, independently, hydrogen or hydrocarbyl; or R₁ and R₂, or R₂ and R₃, or R₃ and R₄, or R₄ and R₅ independently form a fused aliphatic ring of about 3 to about 7 carbon atoms or a fused aromatic ring of about 5 to about 7 carbon atoms. In some embodiments, R₁ and R₅ are each, independently, hydrocarbyl, and R₂-R₄ are hydrogen.

In some embodiments, the electron donor is 2,6-di-*tert*-butylpyridine, 2,6-lutidine, 2,4-dimethylpryidine, 2,4,6-trimethylpyridine, 2-methylpyridine, or pyridine. In some embodiments, the electron donor is N,N-dimethylaniline or N,N-dimethyltoluidine. In some embodiments, the electron donor is 2,6-lutidine.

### (v) Common Ion Salts and Ion Salt Precursors for quasi-living carbocationic polymerization reactions

In some embodiments, common ion salts or salt precursors may be optionally added to the reaction mixture in addition to or in replacement of the electron donor. In some embodiments, such salts may be used to increase the ionic strength, suppress free ions, and interact with ligand exchange. In some embodiments, the common ion salt precursor is tetra-n-butylammonium chloride. In some embodiments, the common ion salt precursor is tetra-n-butylammonium iodide In some embodiments, the concentration of the common ion salts or salt precursors in the total reaction mixture may be in the range from about 0.0005 moles per liter to about 0.05 moles per liter. In some embodiments, the concentration of the common ion salts or salt precursors is in the range from about 0.0005 moles per liter to about 0.025 moles per liter. In some embodiments, the concentration of the common ion salt or salt precursors is in the range from about 0.001 moles per liter to about 0.007 moles per liter.

### B. REACTION OF THE CARBOCATION TERMINATED POLYOLEFIN WITH AN ALLYLSILANE COMPOUND

Once a carbocation terminated polyolefin has been generated, it is then reacted with an allylsilane compound to form an allyl-terminated polyolefin. In one embodiment, the allylsilane compound used in the preparation of the allyl-terminated polyolefins has the following structure: 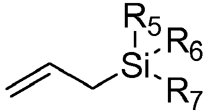 wherein R₅, R₆, and R₇ are alkyl, aryl, alkaryl, or aralkyl. In some embodiments R₅, R₆, R₇ can be, independently, methyl, ethyl, propyl, or phenyl. In a preferred embodiment, the allylsilane compounds is allyltrimethylsilane.

In one embodiment of the present invention, a carbocationic polyolefin chain end is reacted with allytrimethylsilane in the presence of a Lewis acid, as illustrated below:

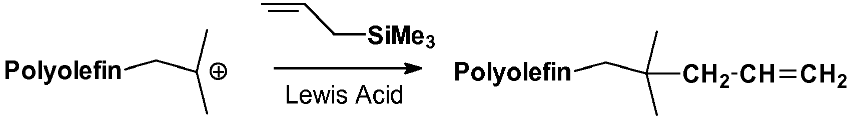

The Lewis acid can be one of the Lewis acids listed above in Section IA(d)(iii), or can be another suitable Lewis acid. In one example, the Lewis acid is TiCl₄.

In another embodiment of the present invention, the carbocationic polyolefin chain end is derived from a quasi-living polymerization and the reaction of the quasi-living carbocationic chain end with the allylsilane compound is conducted in situ. For further details, see the following references: "One-pot synthesis of allyl-terminated linear and tri-arm star polyisobutylenes, and epoxy- and hydroxyl-telechelics therefrom," Ivan et al., J. Poly. Sci., Part A 28, No. 1, pp. 89-104 (1990); and "A Novel Method for the Determination of Propagation Rate Constants: Carbocationic Oligomerization of Isobutylene," Roth et al., Macromolecules 29, pp. 6104-6109 (1996).

### (II) COPOLYMERIZATION OF ALLYL-TERMINATED POLYOLEFINS AND UNSATURATED ACIDIC REACTANTS

After formation of the allyl-terminated polyolefin (*e.g.,* allyl-terminated PIB), the allyl-terminated polyolefin is copolymerized with an unsaturated acidic reactant. In some embodiments, the copolymerization is performed in the presence of a free radical initiator. In one example, the product of the copolymerization is polyallyl PIBSA.

Some non-limiting examples of reagents and conditions are provided below in Sections II(A)-II(D).

### A. UNSATURATED ACIDIC REACTANT

The term "unsaturated acidic reactant refers to maleic or fumaric reactants of the general formula: 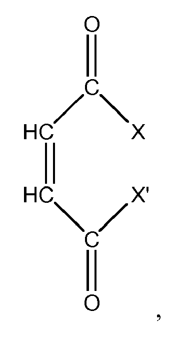 wherein X and X' are each independently selected from the group consisting of -OH, -Cl, - O-lower alkyl, and when taken together, X and X' are -O-.

In some embodiments, X and X' are such that both carboxylic functions can enter into acylation reactions. Maleic anhydride is one example of a useful unsaturated acidic reagent. The use of maleic anhydride in copolymers such as those described herein is particularly useful because the resulting succinic anhydride groups throughout the copolymer can subsequently be modified, *e.g.,* as described in greater detail below, in order to further modify the characteristics of the copolymer.

### (B) FREE RADICAL INITIATOR

A variety of free radical initiators are suitable for use in initiating the copolymerization of the allyl-terminated polyolefin and the unsaturated acidic reagent.

In some embodiments, the copolymerization can be initiated by any suitable free radical initiator. Such free radical initiators are well known in the art.

Peroxide-type polymerization initiators, azo-type polymerization initiators, and radiation are examples of useful free initiators for copolymerization reactions such as those described herein.

The peroxide-type free radical initiator can be organic or inorganic, in some embodiments the organic having the formula R³OOR^{3'} wherein R³ is any organic radical and R^{3'} is selected from the group consisting of hydrogen and any organic radical. Both R³ and R³' can be organic radicals, *e.g.,* hydrocarbon, aryl and acyl radicals, optionally carrying substituents such as halogens. Some non-limiting examples of useful peroxides include di-tert-amyl peroxide, di-tert-butyl peroxide, tert-butyl peroxybenzoate, dicumyl peroxide, benzoyl peroxide, lauroyl peroxide, other tertiary butyl peroxides, 2,4-dichloro-benzoyl peroxide, tertiary-butyl hydroperoxide, acetyl hydroperoxide, diethylperoxycarbonate, and tertiary butyl perbenzoate.

The azo-type compounds, typified by alpha, alpha'-azobisisobutyronitrile, are also well known free radical promoting materials. The azo compounds can be defined as those having present in the molecule group -N=N- wherein the balances are satisfied by organic radicals, at least one of which is preferably attached to a tertiary carbon. Other suitable azo compounds include, but are not limited to, p-bromo benzenediazonium fluoroborate, p-topydiazoaminobenzene, p-bromobenzenediazonium hydroxide, azomethane, and phenyldiazonium halides.

### (C) DILUENTS

The copolymerization reaction can be conducted neat, that is, the quasi-living allyl-terminated polyolefin, the unsaturated acidic reactant, and the free radical initiator can be combined in the proper ratio and then stirred at the reaction temperature. The unsaturated acidic reactant can be added over time, or all at once.

Alternatively, the reaction can be conducted in a diluent. For example, the reactants can be combined in a solvent. The diluent can be a single compound or a mixture of two or more compounds, that completely, nearly completely, or partially dissolves the reaction components. After the reaction is complete, volatile components can be stripped off.

### (D) REACTION CONDITIONS

In some embodiments, the amounts of the different reactants and the temperature of reaction are selected to provide the resulting copolymer (*e.g.,* allyl polyPIBSA) with the desired characteristics.

The amount of free radical initiator to employ, exclusive of radiation, depends to a large extent on the particular free radical initiator chosen, the olefin used, and the reaction conditions. In some embodiments, the free radical initiator is soluble in the reaction medium. Exemplary concentrations of free radical initator are between 0.001:1 and 0.20:1 moles of free radical initiator per mole of acidic reactant, *e.g.,* between 0.005:1 and 0.10:1.

In some embodiments, the polymerization temperature is sufficiently high to break down the initiator to produce the desired free-radicals and to maintain the reactants in a liquid phase at the reaction pressure (*e.g.,* atmospheric pressure).

In some embodiments, the reaction time is sufficient to result in the substantially complete conversion of the acidic reactant and quasi-living allyl-terminated polyolefin to copolymer. Example reaction times are between one and 24 hours, *e.g.,* between two and 10 hours.

As noted above, the subject reaction occurs in liquid phase. The quasi-living allyl-terminated polyolefin, unsaturated acidic reactant, and free radical initiator can be brought together in any suitable manner, *e.g.,* such that the quasi-living allyl-terminated polyolefin and unsaturated acidic reactant are brought into intimate contact in the presence of free radicals generated by the free radical initiator. For example, the reaction can be conducted in a batch system where the quasi-living allyl-terminated polyolefin is added all initially to a mixture of unsaturated acidic reactant, and free radical initiator; alternately, the quasi-living polyolefin can be added intermittently or continuously to the reaction pot. The reactants can also be added in other orders. For example, the initiator and unsaturated acidic reactant can be added to a reaction pot containing the quasi-living allyl-terminated polyolefin. In another manner, the components in the reaction mixture are added continuously to a stirred reactor with continuous removal of a portion of the product to a recovery train or to other reactors in series. The reaction can also suitably take place in a coil-type reactor where the components are added at one or more points along the coil.

After substantial completion of the copolymerization, residual unsaturated acidic reactant can optionally be removed using conventional techniques, *e.g.,* by reducing the pressure over the copolymer to substantially strip off the reactant.

### (III) DISPERSANTS USING COPOLYMERS MADE WITH POLYOLEFINS AND UNSATURATED ACIDIC REACTANTS, AND COMPOSITIONS INCLUDING SAME

Copolymers made with allyl-terminated polyolefins and unsaturated acidic reactants, *e.g.,* polyallyl PIBSA formed using the methods described above, can be reacted with various reactants in order to provide a desired functionality and/or to adjust other characteristics of the copolymers. The resulting polyallyl PIBSA derivatives can then be used in various compositions, such as lubricating oils, fuels, and concentrates.

### A. POLYSUCCINIMIDES

A polysuccinimide can be prepared by reacting a copolymer made as described herein, *e.g.,* polyallyl PIBSA made with allyl-terminated PIB and maleic anhydride, with either an amine or a polyamine, under reactive conditions. Typically, the amine or polyamine is employed in amounts such that there are 0.1 to 1.5 equivalents of amine or polyamine per equivalent of acidic groups in the polyallyl PIBSA/acid-catalyzed thermal allyl PIBSA mixture. In some embodiments, a polyamine is used having at least two nitrogen atoms and 4 to 20 carbon atoms.

It may be desirable to conduct the reaction in an inert organic solvent. Useful solvents will vary and can be determined from literature sources or routine experiments. Typically, the reaction is conducted at temperatures in the range of from about 60°C to 180°C, *e.g.,* 150°C to 170°C, for from about 1 to 10 hours, *e.g.,* from about 2 to 6 hours. Typically, the reaction is conducted at about atmospheric pressure; however, higher or lower pressures can also be used depending on the reaction temperature desired and the boiling point of the reactants or solvent.

Water, present in the system or generated by this reaction, can be removed from the reaction system during the course of the reaction via azeotroping or distillation. After reaction completion, the system can be stripped at elevated temperatures (typically 100°C to 250°C) and reduced pressures to remove any volatile components that may be present in the product.

An amine or a polyamine is used, *e.g.,* a polyamine with at least one or more amine nitrogen atoms per molecule, *e.g.,* 4 to 12 amine nitrogens per molecule. Polyamines having from about 6 to 10 nitrogen atoms per molecule can also be used. Some useful polyalkene polyamines also contain from about 4 to 20 carbon atoms, *e.g.,* from 2 to 3 carbon atoms per alkylene unit, and in some embodiments have a carbon-to-nitrogen ratio of from 1:1 to 10:1.

Non-limiting examples of suitable polyamines that can be used to form succinimides of copolymers such as those described herein include the following: tetraethylene pentamine, pentaethylene hexamine, Dow E-100 heavy polyamine (Mₙ =303, available from Dow Chemical Company), and Union Carbide HPA-X heavy polyamine (Mₙ =275, available from Union Carbide Corporation). Such polyamines encompass isomers, such as branched-chain polyamines, and substituted polyamines, including hydrocarbyl-substituted polyamines. HPA-X heavy polyamine contains an average of approximately 6.5 amine nitrogen atoms per molecule. In some embodiments polyether diamines such as Jeffamine® ED-900, available from Huntsman Chemical Company, may be used. In some embodiments aromatic amines such as N-phenyl-1,4-phenylenediamine (NPPDA) may be used. In some embodiments mixtures of amines, polyamines, polyether diamines, and aromatic amines may be used.

The polyamine reactant can be a single compound or a mixture of compounds reflecting commercial polyamines. Typically, commercial polyamines are a mixture in which one or several compounds predominate with the average composition indicated. For example, tetraethylene pentamine prepared by the polymerization of aziridine or the reaction of dichloroethylene and ammonia typically includes both lower and higher amine members, *e.g.,* triethylene tetramine, substituted piperazines and pentaethylene hexamine, but the composition is largely tetraethylene pentamine and the empirical formula of the total amine composition closely approximates that of tetraethylene pentamine.

Other examples of suitable polyamines include admixtures of amines of various molecular weights. Included are mixtures of diethylene triamine and heavy polyamine. One exemplary polyamine admixture is a mixture containing 20% by weight diethylene triamine and 80% by weight heavy polyamine.

In some embodiments in which an amine, *e.g.,* a monoamine, are employed, the amine is a primary amine, secondary amine, or mixture thereof, and can have at least 10 carbon atoms, *e.g.,* between 12 and 18 carbon atoms. Aromatic, aliphatic, saturated, and unsaturated amines may be employed. Useful amines include aliphatic primary amines. Examples of suitable amines include, but are not limited to, octadecylamine and dodecylamine. An example of a suitable mixture of amines is tallowamine (a partially saturated mixture of amines including mainly C₁₈ amines).

Mixtures of monoamines and polyamines can be used. Also, polyoxyalkylene polyamines (for example, materials supplied under the trade name Jeffamine®) and aminoalcohols can also be suitably used.

### B. POLYESTERS

Polyesters can be prepared by reacting a copolymer made as described herein, *e.g.,* polyallyl PIBSA made with quasi-living allyl-terminated PIB and maleic anhydride, with a polyol, under reactive conditions. The polyols have the formula R"(OH)ₓ where R" is a hydrocarbon radical and x is an integer representing the number of hydroxy radicals and has a value of from 2 to about 10. In some embodiments, the polyols contain less than 30 carbon atoms, and have from 2 to about 10, *e.g.,* 3 to 6, hydroxy radicals. They are illustrated by, for example, alkylene glycols and poly(oxyalkylene) glycols such as ethylene glycol, di(ethylene glycol), tri(ethylene glycol), di(propylene glycol), tri(butylene glycol), penta(ethylene glycol), and other poly(oxyalkylene) glycols formed by the condensation of two or more moles of ethylene glycol, propylene glycol, octylene glycol, or a like glycol having up to 12 carbon atoms in the alkylene radical. Other useful polyhydric alcohols include glycerol, pentaerythritol, 2,4-hexanediol, pinacol, erythritol, arabitol, sorbitol, mannitol, 1,2-cyclohexanediol, xylylene glycol, and 1,3,5-cyclohexanetriol. Other useful polyols are disclosed in U.S. Pat. No. 4,034,038, issued Jul. 5, 1977 to Vogel, which is incorporated by reference in its entirety.

Esterification can be effected, for example, at a temperature of about 100°C to about 180°C, *e.g.,* about 150°C. to about 160°C. Ordinarily, the reaction is carried out at substantially atmospheric pressure, although pressures above atmospheric can be employed, *e.g.,* with more volatile reactants. In some emboidments, stoichiometric amounts of reactants are employed. The reaction can be run in the absence of a catalyst, or in the presence of an acid-type catalyst such as mineral acids, sulfonic acids, Lewis type acids. Suitable reaction conditions and catalysts are disclosed in U.S. Pat. No. 3,155,686, issued Nov. 3, 1964 to Prill et al.

### C. POST-TREATMENT OF POLYSUCCINIMIDES

The dispersancy and other properties of polysuccinimides made as described above, *e.g.,* polysuccinimides made using polyallyl PIBSA made with quasi-living allyl-terminated PIB and maleic anhydride, can be further modified by reaction with a cyclic carbonate. The resulting post-treated product has one or more nitrogens of the polyamino moiety substituted with a hydroxy hydrocarbyl oxycarbonyl, a hydroxy poly(oxyalkylene) oxycarbonyl, a hydroxyalkylene, hydroxyalkylenepoly(oxyalkylene), or mixture thereof.

In some embodiments, the cyclic carbonate post-treatment is conducted under conditions sufficient to cause reaction of the cyclic carbonate with secondary amino groups of the polyamino substituents. In some embodiments, the reaction is conducted at temperatures of about 0°C to 250°C, *e.g.,* from 100°C to 200°C, *e.g.,* from about 150°C to 180°C.

The reaction can be conducted neat, and optionally is conducted in the presence of a catalyst (such as an acidic, basic or Lewis acid catalyst). Depending on the viscosity of the reactants, it may be useful to conduct the reaction using an inert organic solvent or diluent, *e.g.,* toluene or xylene. Examples of suitable catalysts include phosphoric acid, boron trifluoride, alkyl or aryl sulfonic acid, and alkali or alkaline earth carbonate.

One example of a useful cyclic carbonate is 1,3-dioxolan-2-one (ethylene carbonate), which affords suitable results and is readily available commercially.

The molar charge of cyclic carbonate employed in the post-treatment reaction is, in some embodiments, based upon the theoretical number of basic nitrogen atoms contained in the polyamino substitutent of the succinimide. Without wishing to be bound by theory, when one equivalent of tetraethylene pentamine is reacted with two equivalents of succinic anhydride, the resulting bis-succinimide will theoretically contain three basic nitrogen atoms. Accordingly, a molar charge ratio of 2 would theoretically require that two moles of cyclic carbonate be added for each basic nitrogen, or in this case 6 moles of cyclic carbonate for each mole equivalent of succinimide. Mole ratios of the cyclic carbonate to the basic amine nitrogen are typically in the range of from about 1:1 to about 4:1; preferably from about 2:1 to about 3:1.

The dispersancy and other properties of polysuccinimides made as described above, *e.g.,* polysuccinimides made using polyallyl PIBSA made with quasi-living allyl-terminated PIB and maleic anhydride, can be further modified by reaction with boric acid or a similar boron compound to form borated dispersants. In addition to boric acid, examples of suitable boron compounds include boron oxides, boron halides and esters of boric acid. In some embodiments, from about 0.1 equivalent to about 1 equivalent of boron compound per equivalent of basic nitrogen or hydroxyl in the compositions of this invention may be employed.

### D. LUBRICATING OIL COMPOSITIONS AND CONCENTRATES

Polysuccinimides based on polyallyl PIBSA made with quasi-living allyl-terminated PIB and maleic anhydride, such as those described above, are useful as detergent and dispersant additives in lubricating oils. When employed in crankcase oils, such polysuccinimides can, for example, be used in amounts of about 1 to about 10 percent by weight (on an actives basis) of the total composition, *e.g.,* less than about 5 percent by weight (on an actives basis). Actives basis indicates that only the active ingredients of the polysuccinimides are considered when determining the amount of the additive relative to the remainder of a composition. Diluents and any other inactives, such as unreacted polyolefin, are excluded. Unless otherwise indicated, in describing the lubricating oil and final compositions or concentrates, active ingredient contents are intended with respect to the polysuccinimides.

The lubricating oil used with the polysuccinimides may be mineral or synthetic oils of lubricating viscosity and preferably suitable for use in the crankcase of an internal combustion engine. Crankcase lubricating oils typically have a viscosity of about 1300 cSt at 0°F (-17.8°C) to 22.7 cSt at 210°F (99°C). Useful mineral oils include paraffinic, naphthenic and other oils that are suitable for use in lubricating oil compositions. Synthetic oils include both hydrocarbon synthetic oils and synthetic esters. Useful synthetic hydrocarbon oils include polymers of alpha olefins having suitable viscosity, *e.g.,* the hydrogenated liquid oligomers of C₆ to C₁₂ alpha olefins, such as 1-decene trimer. Likewise, alkyl benzenes of proper viscosity such as didodecyl benzene can be used. Useful synthetic esters include the esters of both monocarboxylic acids and polycarboxylic acids as well as monohydroxy alkanols and polyols. Examples are didodecyl adipate, pentaerythritol tetracaproate, di-2-ethylhexyl adipate, dilaurylsebacate. Complex esters prepared from mixtures of mono and dicarboxylic acid and mono and dihydroxy alkanols can also be used.

Blends of hydrocarbon oils and synthetic oils are also useful. For example, blends of 10 to 25 weight percent hydrogenated 1-decene trimer with 75 to 90 weight percent 150 SUS (100°F) mineral oil gives an excellent lubricating oil base.

Other additives which may be present in the formulation include detergents (overbased and non-overbased), rust inhibitors, foam inhibitors, metal deactivators, pour point depressants, antioxidants, wear inhibitors, zinc dithiophosphates and a variety of other well known additives.

It is also contemplated that polysuccinimides prepared as described above can be employed as dispersants and detergents in hydraulic fluids, or marine crankcase lubricants. In some embodiments, the polysuccinimide is added at from 0.1 to 5 percent by weight (on an active polysuccinimide basis) to the fluid, and preferably at from 0.5 to 5 weight percent (on an active polysuccinimide basis).

Polysuccinimides can also be used in additive concentrates, which in some embodiments include from 90 to 10 percent, *e.g.,* 20 to 60 weight percent, of an organic liquid diluent and from 10 to 90 weight percent, *e.g.,* 80 to 40 weight percent, (on a dry basis) of the polysuccinimide. Typically, the concentrates contain sufficient diluent to make them easy to handle during shipping and storage. Suitable diluents for the concentrates include any inert diluent, preferably an oil of lubricating viscosity, so that the concentrate may be readily mixed with lubricating oils to prepare lubricating oil compositions. Suitable lubricating oils which can be used as diluents typically have viscosities in the range from about 1300 cSt at 0°F (-17.8°C) to 22.7 cSt at 210°F (99°C), although an oil of lubricating viscosity can be used.

### E. FUEL COMPOSITIONS AND CONCENTRATES

When used in fuels, useful concentrations of polysuccinimides prepared as described above, to obtain the desired detergency, is dependent upon a variety of factors including the type of fuel used, the presence of other detergents or dispersants or other additives, etc. In some embodiments, the range of concentration of the polysuccinimide in the base fuel is 10 to 10,000 weight parts per million, *e.g.,* from 30 to 5,000 parts per million. If other detergents are present, a lesser amount of the polysuccinimide may be used. The polysuccinimides can also be formulated as a fuel concentrate, using an inert stable oleophilic solvent boiling in the range of about 150-400°F (65.6-204.4°C). Useful solvents boil in the gasoline or diesel fuel range. In some emboidments, an aliphatic or an aromatic hydrocarbon solvent is used, such as a benzene, toluene, xylene or higher-boiling aromatics or aromatic thinners. Aliphatic alcohols of about 3 to 8 carbon atoms, such as isopropanol, isobutylcarbinol, and n-butanol in combination with hydrocarbon solvents are also suitable for use with the polysuccinimide. In the fuel concentrate, the amount of the polysuccinimide will, in some embodiments, be at least 5 percent by weight and not more 70 percent by weight, *e.g.,* from 5 to 50, *e.g.,* from 10 to 25 weight percent.

### EXAMPLES

The invention is further illustrated by the following examples, which are not to be considered as limitative of its scope.

### Example 1. Preparation of Allyl-terminated PIB

A four-neck 3000 milliliter round-bottom flask was equipped with an overhead mechanical stirrer and platinum resistance thermometer. This assembly was immersed into a heptane bath at -70°C under dry nitrogen gas in a substantially inert atmosphere glove box. The flask was then charged with the following reactants:
809 mL hexane equilibrated at -70°C,
756 mL methyl chloride equilibrated at -70°C,
90.3 grams pentaisobutylene hydrochloride,
1.16 mL 2,6-dimethylpyridine,
1.39 grams tetra n-butylammonium chloride, and
325.7 mL of isobutylene equilibrated at -70°C.

The contents of the round-bottom flask were mixed thoroughly and equilibrated at -70°C.

With continued stirring, next 4.7 mL TiCl₄ was charged to the flask. The polymerization was allowed to proceed 57 minutes and then 49.7 mL of allyltrimethylsilane was charged to the reactor. After 3 minutes mixing time, 28.0 ml TiCl₄ was charged to the reactor and the solution was allowed to react for 9 minutes before 100 ml methanol equilibrated at -70°C was charged to terminate the reaction.

The solution was removed from the glove box and volatile components (*e.g.* methyl chloride) were evaporated under ambient conditions. The organic phase was extracted with a 5% HCl aqueous solution followed by extraction with deionized water. The purified organic phase was then dried with MgSO₄ filtered, and solvents vacuum stripped to yield 310g allyl-terminated PIB. NMR characterization indicated the PIB contained greater than 98 mole percent allyl chain ends. A number average molecular weight of 1050 g/mol and DI of 1.1 was determined using gel permeation chromatography equipped with a multi angle laser light scattering detector and a refractive index detector.

### Example 2. Preparation of allyl polyPIBSA

To a 250 mL round bottom flask equipped with a condenser, overhead stirrer, heating mantle, septum, and two syringe pumps was added 100 g of allyl PIB from Example 1 (0.095 mol, Mₙ=1050) under nitrogen in the absence of diluent. The allyl PIB was heated to 150°C and to this was added 1.66 g of di-tert-amyl peroxide (0.01 mol) via one syringe pump at a rate of 0.017 mL/min and 16.2 g of molten maleic anhydride (0.165 mol) via a heated (80°C) syringe pump at a rate of 0.104 mL/min. The total time of addition was 2 h. The mixture was then heated at 150°C for an additional 4 h. The mixture was then heated to 180°C and the unreacted maleic anhydride was removed in vacuo.

The product had a SAP number (saponification number as determined by ASTM D94) of 98.4 mg KOH/g, an actives content (weight percent of product containing anhydride groups) of 86.5 wt%, and a succinic ratio of 1.2. The number average molecular weight of the product (determined using gel permeation chromatography with Universal Calibration) was 1940 and the dispersion index was 2.84. The succinic ratio refers to the ratio calculated in accordance with the procedure and mathematical equation set forth in columns 5 and 6 of U.S. Patent No. 5,334,321, the entire contents of which are incorporated by reference herein. Normally, the succinic ratio refers to the number of succinic groups per polybutene tail. In the context of this application, the succinic ratio refers to the ratio of succinic anhydride to polybutene tails that are present in the polyallyl PIBSA polymer.

### Comparative Example A. PolyPIBSA prepared from high methylvinylidene PIB at 150°C

To a 500 mL flask equipped with a condenser, overhead stirrer, heating mantle and two syringe pumps was added high methylvinylidene PIB (100 g, 0.096 mol, Mₙ = 1046, DI = 1.71, 83% methylvinylidene content). The temperature was increased to 150°C. Di-tert-amyl peroxide (1.74 g, 0.01 mol) and maleic anhydride (15 g, 0.153 mol) were added separately via two syringe pumps over a 2 h period. The maleic anhydride was heated to greater than 80°C so that the sample was a liquid. Both syringe needles were positioned below the surface of the liquid so that the tips of the needles were just touching each other. The reaction was heated for an additional 2 h. Then the excess maleic anhydride was removed by distillation at reduced pressure at 180°C over a 2 h period.

The polyPIBSA had a SAP number (saponification number as determined by ASTM D94) of 123.7mg KOH/g and contained 81.6 wt % actives. The succinic ratio was 1.6. The number average molecular weight of the product (determined using gel permeation chromatography with Universal Calibration) was 1310 and the dispersion index was 2.59.

### Comparative Example B. PolyPIBSA prepared from high methylvinylidene PIB at 140°C

Comparative example A was repeated except that maleic anhydride (14.34g, 0.146 mol), di-tert-amyl peroxide (1.4g, 0.0096 mol) were used, 25g tetrachloroethylene was used as a solvent, and the temperature was 140°C instead of 150°C. The solvent was removed in vacuo to give a product that had a SAP number of 96.4 mg KOH/g sample and contained 61.2% actives.

The succinic ratio was 1.7. The number average molecular weight of the product (determined using gel permeation chromatography with Universal Calibration) was 1130 and the dispersion index was 2.59.

### Comparative Example C. PolyPIBSA prepared from high methylvinylidene PIB at 90°C

Comparative example B was repeated except that high methylvinylidene PIB (102.5g 0.098 mol), maleic anhydride (14.7g 0.150 mol), t-butylperoctanoate (2.25g, 0.0098 mol) was used, and the temperature was 90°C instead of 140°C. The solvent was removed in vacuo to give a product that had a SAP number of 47.6 mg KOH/g sample and contained 52% actives. The succinic ratio was 0.9. The number average molecular weight of the product (determined using gel permeation chromatography with Universal Calibration) was 1560 and the dispersion index was 5.34.

The copolymer characteristics of Example 2 and Comparative Examples A through C are shown in Table 1.

**Table 1**

| Example | PIB Mₙ | Temp °C | % actives | SAP mg KOH/g | ASR | Product Mₙ |
|---|---|---|---|---|---|---|
| 2 | 1050 | 150 | 86.5 | 98.4 | 1.2 | 1940 |
| Comparative A | 1046 | 150 | 81.6 | 123.7 | 1.6 | 1310 |
| Comparative B | 1046 | 140 | 61.8 | 96.4 | 1.7 | 1130 |
| Comparative C | 1046 | 90 | 52 | 47.6 | 0.9 | 1560 |

These results show that as the reaction temperature is lowered, the % actives for polyPIBSA prepared using the conventional copolymerization process with high methylvinylidene PIB decreased from 81.6% to 52% while the Mₙ increased from about 1310 to about 1560, In contrast, using the allyl-terminated PIB to make the copolymers of this invention, the Mn of the polyPIBSA was 1940 and the % actives was 86.5%.

Since high molecular weight dispersants are generally useful in preventing viscosity increase due to soot, and in controlling sludge and varnish, these results show that the copolymer of Example 2 made from the allyl-terminated PIB in Example 1 gives a high degree of oligomerization while still maintaining high percent actives.

### Low Temperature Performance Results for Example 2 and Comparative Example A

Multigrade oils (for example a 10W30 oil) meet the SAE 10W viscosity limit at low temperature and the SAE 30 viscosity limit at high temperature. Example of ways to meet the desired viscosity targets are to use: 1) blends of different viscosity base oils (for example 100 neutral plus 600 neutral oils), 2) unconventional base oils with high viscosity index (VI), 3) a detergent/inhibitor additive package with a lower Cold Crank Simulator (CCS) thickening and 4) viscosity index improvers (VI improvers) which improve the viscosity index of formulated oils. The use of the right combination of these four variables can produce formulated oils with high kinematic viscosity (kv) at 100°C and low CCS viscosity at for example -20°C.

Under certain conditions, *e.g.,* for a high fuel economy passenger car motor oil (PCMO) formulation it may be desirable for a dispersant to have both a low CCS viscosity and a low kv. This can be determined by measuring the CCS and the kv for a dispersant dissolved in a diluent oil. A dispersant with a lower CCS and kv may have the best performance.

Under other conditions, it is sometimes desirable for the dispersant to have a high kv and a low CCS viscosity so that less VI improver is needed to meet the desired viscosity grade This can be determined by plotting the CCS versus kv and measuring the slope. The dispersant with the lowest slope has the best performance.

In order to demonstrate the improved low temperature properties discussed above for allyl polyPIBSA derived from allyl-terminated PIB compared to the polyPIBSA derived from conventional high methylvinylidene PIB , the Cold Cranking Simulator (CCS) viscosity and the kinematic viscosity (kv) were measured for the products of Example 2 and Comparative Example A. The results are presented in Table 2. For this analysis the polyPIBSAs in Example 2 and Comparative Example A were first dissolved in Chevron 100 neutral diluent oil at a dose of 4 wt% and 8 wt%. Chevron 100 neutral diluent oil is a Group 2 diluent oil. The kinematic viscosity (kv @ 100°C) was measured using ASTM D445. The cold crank simulator (CCS) was measured using ASTM D5293. These results are shown in Table 2.

**Table 2**

| Example | Dose (wt %) | CCS (cP) | kv (cSt) |
|---|---|---|---|
| 2 | 4 | 1181 (1.181 Pa.s) | 4.837 (4.837 x 10⁻⁶ m²/s) |
| | 8 | 1873 (1.873 Pa.s) | 6.010 (6.010 x 10⁻⁶ m²/s) |
| Comparative A | 4 | 1163 (1.163 Pa.s) | 4.851 (4.851 x 10⁻⁶ m²/s) |
| | 8 | 1714 (1.714 Pa.s) | 5.851 (5.851 x 10⁻⁶ m²/s) |

These results show that the copolymer of Example 2 prepared from the allyl-terminated PIB of Example 1 gave about the same CCS and kv viscosities as the copolymer prepared from conventional high methylvinylidene PIB (Comparative Example A). This result was unexpected because the molecular weight of the copolymer of Example 2 was greater than the molecular weight of the copolymer of Comparative Example A and therefore the copolymer of Example 2 would have been expected to give higher viscosity values. This lower viscosity result is desirable when formulating detergent / inhibitor packages for use in cold climates.

### Example 3. Reaction of allyl polyPIBSA with polyetheramine and an aromatic amine to form a polysuccinimide

To a 500 mL 4-neck flask equipped with a Dean-Stark trap, condenser, overhead stirrer, temperature controller, and heating mantle was added 40.22 g of allyl polyPIBSA as prepared in Example 2 and 20 g of Chevron 100N diluent oil. The mixture was heated to 100°C and 3.49 g of N-phenyl phenylenediamine (NPPDA) was added. The temperature of the mixture was then increased to 140°C and 7.06 g of Jeffamine® ED-900 (a polyether diamine, ∼950 MW, available from Huntsman Chemical Company), was added. The temperature of the mixture was increased to 165°C and held at that temperature for 1 h. Any remaining water was removed in vacuo and the product allowed to cool. An additional 20 g of Chevron 100N diluent oil was added. The product had an actives content of 50 wt%, a nitrogen content of 0.847%, a TBN (total base number as determined by ASTM D2896) of 4.62 mg KOH/g and a TAN (total acid number as determined by ASTM D664) of 4.55 mg KOH/g. The low temperature properties of this polysuccinimide made from allyl polyPIBSA are presented in Table 3.

### Comparative Example D. Preparation of bis TEPA polysuccinimide from polyPIBSA made using high methylvinylidene PIB

To a 4-neck 500 mL round bottom flask equipped with an overhead stirrer, condenser, Dean Stark trap, heating mantle, temperature controller, and nitrogen inlet tube was added 43.54 g (48.0 mmol) polyPIBSA (from high methylvinylidene PIB) of Comparative Example A. To this was added 27.52 g Chevron 100N diluent oil. The temperature was increased to 150°C and to this was added 4.53 g tetraethylene pentamine (TEPA, 24.0 mmol). The amine/anhydride CMR = 0.5. The temperature was increased to 170°C and kept there overnight. The color turned dark brown. Then the reaction was cooled. The product polysuccinimide (52% actives) had 2.5 %N and vis @ 100°C = 672.1 cSt.

### Low Temperature Property Results

In order to demonstrate the improved low temperature properties discussed above for polysuccinimides derived from allyl-terminated PIB compared to the conventional high methylvinylidene PIB, the Cold Cranking Simulator (CCS) viscosity and the kinematic viscosity (kv) were measured for the products of Example 3 and Comparative Example D. The results are presented in Table 3. For this analysis, the polysuccinimides in Example 3 and Comparative Example D were first dissolved in Chevron 100 neutral diluent oil at the doses indicated in Table 3. The kinematic viscosity (kv @ 100°C) was measured using ASTM D445. The cold crank simulator (CCS) was measured using ASTM D5293. These results are shown in Table 3.

**Table 3**

| Example | Dose (wt %) | CCS (cP) | kv (cSt) | Slope |
|---|---|---|---|---|
| 3 | 3 | 855 (0.855 Pa.s) | 4.432 (4.432 x 10⁻⁶ m²/s) | 281 |
| | 5 | 964 (0.964 Pa.s) | 4.750 (4.750 x 10⁻⁶ m²/s) | |
| | 8 | 1104 (1.104 Pa.s) | 5.225 (5.225 x 10⁻⁶ m²/s) | |
| Comparative D | 4 | 1034 (1.034 Pa.s) | 4.761 (4.761 x 10⁻⁶ m²/s) | 271 |
| | 8 | 1293 (1.293 Pa.s) | 5.659 (5.659 x 10⁻⁶ m²/s) | |

The data in Table 3 shows that the polymeric dispersant of Example 3 made from allyl polyPIBSA had lower CCS and lower kv than the polymeric dispersant of Comparative Example D made from high methylvinylidene polyPIBSA even though the allyl polyPIBSA had a higher Mₙ than the high methylvinylidene polyPIBSA. This may be desirable, for example, for use in a high fuel economy passenger car motor oil (PCMO) formulation. In addition, the polymeric dispersant of Example 3 had about the same CCS/kv slope as the polymeric dispersant of Comparative Example D even though the polymeric dispersant of Example 3 had a higher Mₙ than the polymeric dispersant of Comparative Example D. This may be desirable in cases where less VI improver is needed to meet the desired viscosity grade.

### Soot Dispersancy Results

Soot dispersancy tests were also carried out on the polysuccinimide of Example 3 at different dosages in the soot thickening bench test. The details of this test are described in U.S. Patent No. 5,716,912. In the soot thickening bench test, the kinematic viscosity of an oil is measured with and without carbon black. Since carbon black is known to agglomerate, this normally causes an increase in the kinematic viscosity of the oil. Consequently, a dispersant that gives a lower viscosity increase in the presence of carbon black is expected to perform better than a dispersant that gives a higher viscosity increase in the presence of carbon black. That is because a dispersant that has better performance prevents the agglomeration of carbon black. The results of the soot thickening bench test are presented in Table 4.

**Table 4**

| Example | Dosage (wt %) | % Vis Increase |
|---|---|---|
| 3 | 2 | 136.1 |
| | 6 | 104.0 |
| Baseline (No dispersant) | 0 | 280.0 |

The results of the soot thickening bench test indicate that the percent viscosity increase using the polysuccinimide of Example 3 was lower than the percent viscosity increase in a formulated oil that does not contain any dispersant. This test indicates that the polysuccinimide of Example 3 is an effective dispersant.

## Claims

1. A copolymer of an unsaturated acidic reactant and a high molecular weight polyolefin, wherein the polyolefin comprises an allyl-terminated polymeric product; and wherein the high molecular weight polyolefin has a number average molecular weight between about 500 and about 10,000.

2. The copolymer of claim 1, wherein:
(i) the allyl-terminated polymeric product is formed by:
(a) ionizing a polyolefin to form a carbocation terminated polyolefin,
(b) reacting the carbocation terminated polyolefin from step (a) with an allylsilane compound in the presence of a Lewis acid, and
(c) terminating step (b) to form the allyl-terminated polymeric product; or
(ii) the allyl-terminated polymeric product is an allyl-terminated quasi-living polymeric product prepared by:
(a) forming a quasi-living *tert*-halide terminated polyolefin under suitable quasi-living conditions in the presence of a Lewis acid,
(b) reacting the quasi-living *tert*-halide terminated polyolefin with an allylsilane compound, and
(c) terminating step (b) to form the allyl-terminated quasi-living polymeric product.

3. The copolymer of claim 2, wherein the allylsilane compound comprises allyltrimethylsilane.

4. The copolymer of any one of claims 1 to 3, wherein the copolymer is formed by contacting the polyolefin with the unsaturated acidic reactant in the presence of a free radical initiator; optionally wherein the free radical initiator comprises a peroxide.

5. The copolymer of any one of claims 1 to 4, wherein:
(i) the polyolefin has a number average molecular weight between about 500 and about 10,000 or between about 900 and about 5,000; or
(ii) the copolymer has a succinic ratio of between about 1 and about 2, or between about 1.0 and about 1.5; or
(iii) the polyolefin has an allyl end-group content of at least 75% or at least 90%; or
(iv) the polyolefin has a dispersion index of less than about 2 or less than about 1.4.

6. The copolymer of any one of claims 1 to 5,
wherein the polyolefin is polyisobutylene, or
wherein the unsaturated acidic reactant is of the formula: 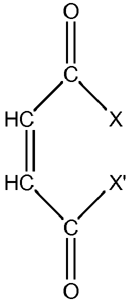 wherein X and X' are each independently selected from the group consisting of -OH, -Cl, and -O-lower alky, where the lower alkyl contains from 1 carbon atom to about 6 carbon atoms; or when taken together, X and X' are -O-; optionally wherein the unsaturated acidic reactant comprises maleic anhydride.

7. The copolymer of any one of claims 1 to 6, wherein the copolymer has the formula: 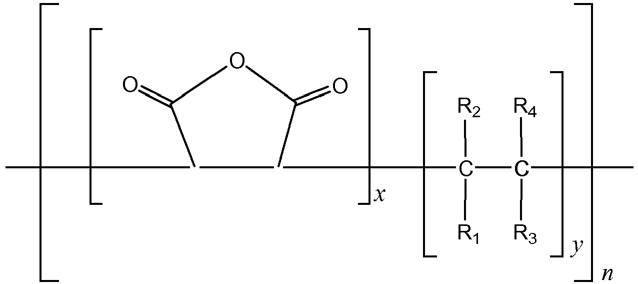 wherein three of R₁, R₂, R₃, and R₄ are hydrogen and the other is high molecular weight polyalkyl, where the high molecular weight polyalkyl has at least 30 carbon atoms; and
wherein each of x, y, and n is, independently, 1 or greater, and wherein the ratio of x:y is from 2:1 to 1:1.

8. The copolymer of claim 7, wherein n is between 1 and 20, or wherein the high molecular weight polyalkyl comprises a polyisobutyl group having at least 30 carbon atoms.

9. A polysuccinimide prepared by reacting the copolymer of any one of claims 1 to 8 with an amine, a polyamine having at least two basic nitrogen atoms, or mixtures thereof.

10. A lubricating oil composition comprising a major amount of an oil of lubricating viscosity of about 1300 x 10⁻⁶ m²/s (1300 cSt) at -17.8 °C to 22.7 x 10⁻⁶ m²/s (22.7 cSt) at 99 °C and a minor amount of the polysuccinimide of claim 9.

11. A method of making a copolymer, the method comprising:
(a) forming a high molecular weight, allyl-terminated polyolefin, wherein the high molecular weight polyolefin has a number average molecular weight between about 500 and about 10,000; and
(b) contacting the allyl-terminated polyolefin with an unsaturated acidic reactant in the presence of a free radical initiator to form a copolymer.

12. The method of claim 11, wherein forming the allyl-terminated polyolefin comprises:
(a) ionizing a polyolefin to form a carbocation terminated polyolefin,
(b) reacting the carbocation terminated polyolefin from step (a) with an allylsilane compound in the presence of a Lewis acid, and
(c) terminating step (b) to form the allyl-terminated polyolefin.

13. The method of claim 12, wherein the allylsilane compound comprises allyltrimethylsilane.

14. The method of any one of claims 11 to 13, wherein:
(i) the polyolefin has a molecular weight between about 500 and about 10,000, or between about 900 and about 5,000; or
(ii) the polyolefin has an allyl end group content of at least 75%, or at least 90%.

15. The method of any one of claims 11 to 14, wherein the unsaturated acidic reactant is of the formula: 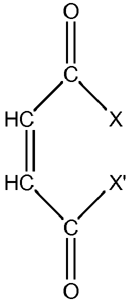 wherein X and X' are each independently selected from the group consisting of -OH, -Cl, and -O-lower alkyl, where the lower alkyl contains from 1 carbon atom to about 6 carbon atoms; or when taken together, X and X' are -O-; optionally wherein the acidic reactant comprises maleic anhydride.

16. The method of any one of claims 11 to 15, wherein the copolymer is formed by contacting the polyolefin with the unsaturated acidic reactant in the presence of a free radical initiator; optionally wherein the free radical initiator comprises a peroxide.

## Patentansprüche

1. Copolymer aus einem ungesättigten sauren Reagens und einem Polyolefin mit hohem Molekulargewicht, wobei das Polyolefin ein Allyl-terminiertes polymerisches Produkt umfasst; und wobei das Polyolefin mit hohem Molekulargewicht ein zahlengemitteltes Molekulargewicht zwischen etwa 500 und etwa 10.000 hat.

2. Copolymer gemäß Anspruch 1, worin
(i) das Allyl-terminierte polymerische Produkt gebildet wird durch
(a) Ionisierung eines Polyolefins zum Bilden eines Carbokationterminierten Polyolefins,
(b) Reaktion des Carbokation-terminierten Polyolefins aus Schritt (a) mit einer Allylsilanverbindung in der Anwesenheit einer Lewis-Säure, und
(c) Terminierung von Schritt (b) zum bilden des Allyl-terminierten polymerischen Produkts; oder
(ii) das Allyl-terminierte polymerische Produkt ein Allyl-terminiertes quasilebendes polymerisches Produkt ist, hergestellt durch
(a) Bildung eines quasi-lebenden *tert*-Halogenid-terminerten Polyolefins unter geeigneten quasi-lebenden Bedingungen in der Anwesenheit einer Lewis-Säure,
(b) Reaktion des quasi-lebenden *tert-*Halogenid-terminerten Polyolefins mit einer Allylsilanverbindung, und
(c) Terminierung von Schritt (b) zum Bilden des Allyl-terminierten polymerischen Produkts.

3. Copolymer gemäß Anspruch 2, worin die Allylsilanverbindung Allyltrimethylsilan umfasst.

4. Copolymer gemäß irgendeinem der Ansprüche 1 bis 3, wobei das Copolymer gebildet wird durch Zusammenbringen des Polyolefins mit dem ungesättigten sauren Reagens in der Anwesenheit eines Freiradikal-Initiators; wahlweise, wobei der Freiradikal-Initiator ein Peroxyd umfassst.

5. Copolymer gemäß irgendeinem der Ansprüche 1 bis 4, wobei
(i) das Polyolefin ein zahlengemitteltes Molekulargewicht zwischen etwa 500 und etwa 10.000 oder zwischen etwa 900 und etwa 5.000 hat; oder
(ii) das Copolymer ein Succinyl-Verhältnis zwischen etwa 1 und etwa 2, oder zwischen etwa 1,0 und etwa 1,5 hat; oder
(iii) das Polyolefin einen Allyl-Endgruppengehalt von mindestens 75% oder mindestens 90% hat; oder
(iv) das Polyolefin einen Dispersionsindex von geringer als etwa 2 oder geringer als etwa 1,4 hat.

6. Copolymer gemäß irgendeinem der Ansprüche 1 bis 5,
wobei das Polyolefin Polyisobutylen ist, oder
wobei das ungesättigte saure Reagens gemäß der Formel 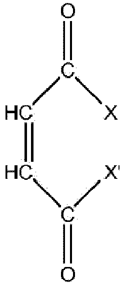 ist,
wobei X und X' jeweils unabhängig ausgewählt sind aus der Gruppe -OH, -Cl, und -O-niederes Alkyl, wobei das niedere Alkyl von 1 Kohlenstoffatom bis etwa 6 Kohlenstoffatome enthält; oder, wenn zusammengezählt, X und X' -O-sind; wahlweise, wobei das ungesättigte saure Reagens Maleinanhydrid umfasst.

7. Copolymer gemäß irgendeinem der Ansprüche 1 bis 6, wobei das Copolymer die Formel hat 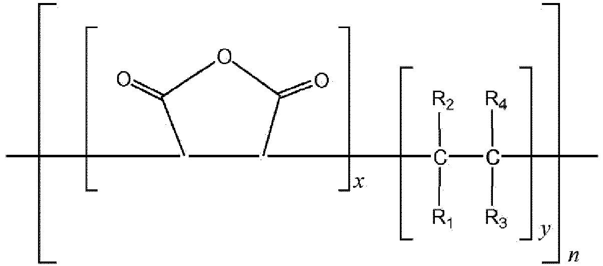
worin drei aus R₁, R₂, R₃ und R₄ Wasserstoff sind und das andere ein Polyalkyl mit hohem Molekulargewicht, wobei das Polyalkyl mit hohem Molekulargewicht mindestens 30 Kohlenstoffatome hat; und
worin jedes aus x, y und n unabhängig 1 oder größer ist, und wobei das Verhältnis von x:y von 2:1 bis 1:1 ist.

8. Copolymer gemäß Anspruch 7, worin n zwischen 1 und 20 ist, oder worin das Polyalkyl mit hohem Molekulargewicht eine Polyisobutylgruppe mit mindestens 30 Kohlenstoffatomen umfasst.

9. Polysuccinimid, hergestellt durch Reagieren des Copolymers aus irgendeinem der Ansprüche 1 bis 8 mit einem Amin, einem Polyamin mit mindestens zwei basischen Stickstoffatomen, oder Gemischen davon.

10. Schmierölzusammensetzung, umfassend eine größere Menge eines Öls mit Schmierviskosität von etwa 1300 x 10⁻⁶ m²/s (1300 cSt) bei -17,8°C bis 22,7 x 10⁻⁶ m²/s (22,7 cSt) bei 99°C und eine kleinere Menge des Polysuccinimids aus Anspruch 9.

11. Herstellungsverfahren für ein Copolymer, das Verfahren umfassend
(a) Bilden eines Allyl-terminierten Polyolefins mit hohem Molekulargewicht, wobei das Polyolefin mit hohem Molekulargewicht ein zahlengemitteltes Molekulargewicht zwischen etwa 500 und etwa 10.000 hat; und
(b) Zusammenbringen des Allyl-terminierten Polyolefins mit einem ungesättigten sauren Reagens in der Anwesenheit eines Freiradikal-Initiators zum Bilden eines Copolymers.

12. Verfahren gemäß Anspruch 11, wobei Bilden des Allyl-terminierten Polyolefins umfasst
(a) Ionisierung eines Polyolefins zum Bilden eines Carbokationterminierten Polyolefins,
(b) Reaktion des Carbokation-terminierten Polyolefins aus Schritt (a) mit einer Allylsilanverbindung in der Anwesenheit einer Lewis-Säure, und
(c) Terminierung von Schritt (b) zum Bilden des Allyl-terminierten polymerischen Produkts

13. Verfahren gemäß Anspruch 12, worin die Allylsilanverbindung Allyltrimethylsilan umfasst.

14. Verfahren gemäß irgendeinem der Ansprüche 11 bis 13, worin
(i) das Polyolefin ein Molekulargewicht zwischen etwa 500 und etwa 10.000 hat, oder zwischen etwa 900 und etwa 5.000; oder
(ii) das Polyolefin einen Allyl-Endgruppengehalt von mindestens 75% oder mindestens 90% hat.

15. Verfahren gemäß irgendeinem der Ansprüche 11 bis 14,
wobei das ungesättigte saure Reagens gemäß der Formel 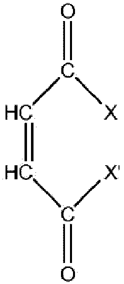 ist,
wobei X und X' jeweils unabhängig ausgewählt sind aus der Gruppe -OH, -Cl, und -O-niederes Alkyl, wobei das niedere Alkyl von 1 Kohlenstoffatom bis etwa 6 Kohlenstoffatomen enthält; oder, wenn zusammengezählt, X und X' -O-sind; wahlweise, wobei das ungesättigte saure Reagens Maleinanhydrid umfasst.

16. Verfahren gemäß irgendeinem der Ansprüche 11 bis 15, worin das Copolymer gebildet wird durch Zusammenbringen des Polyolefins mit dem ungesättigten sauren Reagens in der Anwesenheit eines Freiradikal-Initiators; wahlweise, wobei der Freiradikal-Initiator ein Peroxyd umfasst.

## Revendications

1. Copolymère d'un réactif acide insaturé et d'une polyoléfine à poids moléculaire élevé, dans lequel la polyoléfine comprend un produit polymérique se terminant en allyle ; et dans lequel la polyoléfine à poids moléculaire élevé a un poids moléculaire moyen en nombres entre environ 500 et environ 10.000.

2. Copolymère selon la revendication 1, dans lequel :
(i) le produit polymérique se terminant en allyle est formé par :
(a) ionisation d'une polyoléfine pour former une polyoléfine se terminant en un carbocation,
(b) réaction de la polyoléfine se terminant en un carbocation de l'étape (a) avec un composé allylesilane en la présence d'un acide de Lewis, et
(c) achèvement de l'étape (b) pour former un produit polymérique se terminant en allyle ; ou
(ii) le produit polymérique se terminant en allyle est un produit polymérique quasi-vivant se terminant en allyle préparé par :
(a) formation d'une polyoléfine quasi-vivante se terminant en *tert-*halogénure dans des conditions quasi-vivantes appropriées en la présence d'un acide de Lewis,
(b) réaction de la polyoléfine quasi-vivante se terminant en *tert-*halogénure avec un composé allylesilane, et
(c) achèvement de l'étape (b) pour former un produit polymérique se terminant en allyle.

3. Copolymère selon la revendication 2, dans lequel le composé allylesilane comprend l'allyletriméthylesilane.

4. Copolymère selon l'une quelconque des revendications 1 à 3, dans lequel le copolymère est formé en contactant la polyoléfine avec le réactif acide insaturé en la présence d'un initiateur à radicaux libres ; éventuellement dans lequel l'initiateur à radicaux libres comprend un peroxyde.

5. Copolymère selon l'une quelconque des revendications 1 à 4, dans lequel :
(i) la polyoléfine à poids moléculaire élevé a un poids moléculaire moyen en nombres entre environ 500 et environ 10.000 ou entre environ 900 et environ 5.000 ; ou
(ii) le copolymère a un rapport succinique entre environ 1 et environ 2, ou entre environ 1,0 et environ 1,5 ; ou
(iii) la polyoléfine a un contenu en groupe terminal allyle d'au moins 75% ou au moins 90% ; ou
(iv) la polyoléfine a un indice de dispersion de moins d'environ 2 ou moins d'environ 1,4.

6. Copolymère selon l'une quelconque des revendications 1 à 5,
dans lequel la polyoléfine est le polyisobutylène, ou
dans lequel le réactif acide insaturé est selon la formule : 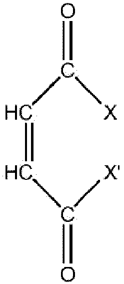 où X et X' sont chacun indépendamment sélectionnés parmi le groupe constitué en -OH, -Cl, et -O-alky inférieur, où l'alky inférieur contient entre 1 atome de carbone à 6 atomes de carbone ; ou pris ensemble, X et X' sont -O- ; éventuellement où le réactif acide insaturé comprend l'anhydride maléique.

7. Copolymère selon l'une quelconque des revendications 1 à 6, dans lequel le copolymère a la formule suivante : 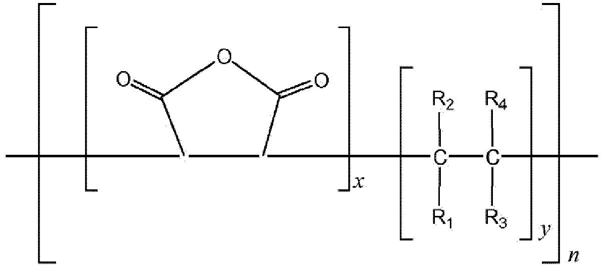
dans laquelle trois parmi R₁, R₂, R₃ et R₄ sont l'hydrogène et l'autre est un polyalkyle à poids moléculaire élevé, où le polyalkyle à poids moléculaire élevé a au moins 30 atomes de carbone ; et
dans laquelle chacun parmi x, y et n est, indépendamment, 1 ou supérieur, et dans laquelle le rapport de x:y est de 2:1 à 1:1.

8. Copolymère selon la revendication 7, dans lequel n est entre 1 et 20, ou dans lequel le polyalkyle à poids moléculaire élevé comprend un groupe polyisobutyle ayant au moins 30 atomes de carbone.

9. Polysuccinimide préparé par la réaction du copolymère de l'une quelconque des revendications 1 à 8 avec une amine, une polyamine ayant au moins deux atomes d'azote basiques, ou leurs mélanges.

10. Composition d'huile lubrifiante comprenant une quantité majeure d'une huile à viscosité lubrifiante d'environ 1300 x 10⁻⁶ m²/s (1300 cSt) à -17,8°C bis 22,7 x 10⁻⁶ m²/s (22,7 cSt) à 99°C, et une quantité mineure du polysuccinimide de la revendication 9.

11. Procédé pour préparer un copolymère, le procédé comprenant :
(a) former une polyoléfine à poids moléculaire élevé se terminant en allyle, dans laquelle la polyoléfine à poids moléculaire élevé a un poids moléculaire moyen en nombres entre environ 500 et environ 10.000 ; et
(b) contacter la polyoléfine se terminant en allyle avec un réactif acide insaturé en la présence d'un initiateur à radicaux libres pour former un copolymère.

12. Procédé selon la revendication 11, dans lequel la formation de la polyoléfine se terminant en allyle comprend :
(a) ionisation d'une polyoléfine pour former une polyoléfine se terminant en un carbocation,
(b) réaction de la polyoléfine se terminant en un carbocation de l'étape (a) avec un composé allylesilane en la présence d'un acide de Lewis, et
(c) achèvement de l'étape (b) pour former la polyoléfine se terminant en allyle.

13. Procédé selon la revendication 12, dans lequel le composé allylesilane comprend l'allyletriméthylesilane.

14. Procédé selon l'une quelconque des revendications 11 à 13, dans lequel :
(i) la polyoléfine a un poids moléculaire moyen en nombres entre environ 500 et environ 10.000 ou entre environ 900 et environ 5.000 ; ou
(ii) la polyoléfine a un contenu en groupe terminal allyle d'au moins 75% ou au moins 90%.

15. Procédé selon l'une quelconque des revendications 11 à 14,
dans lequel le réactif acide insaturé est selon la formule : 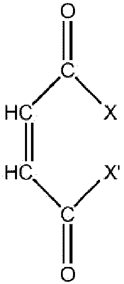 où X et X' sont chacun indépendamment sélectionnés parmi le groupe constitué en -OH, -Cl, et -O-alky inférieur, où l'alky inférieur contient entre 1 atome de carbone à 6 atomes de carbone ; ou pris ensemble, X et X' sont -O- ; éventuellement où le réactif acide insaturé comprend l'anhydride maléique.

16. Procédé selon l'une quelconque des revendications 11 à 15, dans lequel le copolymère est formé en contactant la polyoléfine avec le réactif acide insaturé en la présence d'un initiateur à radicaux libres ; éventuellement dans lequel l'initiateur à radicaux libres comprend un peroxyde.
